# EUROPÄISCHE PATENTANMELDUNG

(11) **EP 0 631 729 A1**
(43) Veröffentlichungstag der Anmeldung: **04.01.1995**
(21) Anmeldenummer: 94810351.0
(22) Anmeldetag: 14.06.1994
(51) Int. Cl.: A23K 1/14, A23K 1/00

(54) **Verfahren zur Herstellung eines Futtermittels**

(30) Priorität: 26.06.1993 CH 1916/93
(71) Anmelder: Glanzmann, Erwin, CH-8466 Trüllikon (CH)
(72) Erfinder: Glanzmann, Andreas, CH-8526 Oberneunforn (CH); Glanzmann, Peter, CH-8466 Trüllikon (CH)
(74) Vertreter: Patentanwälte Breiter + Wiedmer AG

(57) **Zusammenfassung**

Aus ölhaltigen Samenkörnern von Hülsenfrüchten, insbesondere aus Raps- und/oder Senfkörnern, welche nach dem Dreschen gereinigt, getrocknet und zerquetscht werden, wird ein schüttfähiges, staubfreies Futtermittel hergestellt.

Es stehen zerquetschte Samenkörner mit einem in bezug auf den Ölgehalt vorgegebenen Wert zur Verfügung. Zu den zerquetschten Samenkörnern wird eine ligninhaltige Verbindung und eine zuckerhaltige Masse, unter Zugabe von Wasser, dosiert. Durch intensives Rühren wird eine homogene Mischung mit durch Reibungswärme erhöhter Temperatur erzeugt. Die homogene Mischung wird in Pellets unterteilt, noch feucht in einem Toaster auf eine über dem Siedepunkt von Wasser liegende Temperatur erhitzt und getrocknet.

Die getrockneten Pellets können mit eine ligninhaltige Verbindung enthaltendem Wasser angefeuchtet und zwischen einem Walzenpaar zu Schrot, Flocken oder Griess kompaktiert werden.

## Beschreibung

Die Erfindung bezieht sich auf ein Verfahren zur Herstellung eines schüttfähigen, staubfreien Futtermittels aus ölhaltigen Samenkörnern von Hülsenfrüchten, insbesondere aus Raps- und/oder Senfkörnern, welche nach dem Dreschen gereinigt, getrocknet und zerquetscht werden.

Tierfutter in Form von Pellets sind seit langem bekannt und werden für die tierische Ernährung auf breiter Basis verwendet. Ihre Herstellung erfolgt nach verschiedenen Verfahren und aus unterschiedlichen Komponenten. In der Regel geht man von Futtermehl aus, das durch Mischen, Mahlen und Homogenisierung verschiedener kohlehydratreicher, eiweiss- und fetthaltiger pflanzlicher Produkte erhalten wird.

Neben derartigen Mischfuttern aus organischen Komponenten sind auch auf spezieller pflanzlicher Basis hergestellte Futtermittel bekannt, beispielsweise Sojaschrot. Für die Milchviehfütterung kann Sojaschrot durch Sulfid-Wasser, einem xylosehaltigen Nebenprodukt der Zellstoffindustrie, behandelt werden. Dadurch kann das Eiweiss von Sojaschrot denaturiert werden, ohne die Aminosäuren nennenswert zu schädigen, wodurch mehr Eiweiss unverändert den Pansen eines Rindviehs passiert.

Neben dem weitverbreiteten Sojaschrot als Proteinquelle sind bisher andere Basisstoffe für Futtermittel wenig benutzt worden. So verbleiben bei der Verarbeitung von Rapssaat, ölhaltigen Samenkörnern von Hülsenfrüchten zur Gewinnung von Rapsöl, rund 60% als Extraktionsschrot oder Presskuchen, je nach dem Herstellungsverfahren des Ölfabrikanten. Diese O-Rapsnebenprodukte werden wohl als bekannte Proteinquelle für die Tierfütterung verwertet, blieben jedoch wegen ihres hohen Glucosinolatgehaltes von 120 - 180 µmol/g bezüglich ihrer Verwendung beschränkt. In Gegenwart von Wasser und Mycrosinase, einem Enzym in Pflanzen und Darmbakterien, entstehen beim Abbau der Glucosinolate senfölartige Verbindungen, welche die Schmackhaftigkeit des Futters vermindern und sich überdies, beispielsweise bei Schweinen, toxikologisch und wachstumshemmend auswirken können.

In neuen Rapszüchtungen, den sogenannten 00 - Sorten, ist der Glucosinolatgehalt in bedeutendem Ausmass gesenkt worden, beispielsweise auf EG - Normwerte von höchstens 20 µmol/g Glucosinolatgehalt. Dadurch werden die 00 - Sorten von Raps eine höchst interessante Futtermittelquelle für den Einsatz auf breiter Basis. Dies ist umso zukunftsträchtiger, als auch das Interesse an Rapsöl stark im Steigen ist. Überproduktionen in der Landwirtschaft lassen eine Verdoppelung der Rapsanbauflächen ohne weiteres als möglich erscheinen, seit die Produktion von Rapsmethylester, auch Biodiesel genannt, an Aktualität gewonnen hat. Mit einem Erntefaktor von etwa 2,4 (output: input) fällt die Energiebilanz des Rapsanbaues deutlich positiv aus. Heute wird nur noch Raps der 00 - Sorten angebaut.

Die DE,A1 3305984 beschreibt ein Verfahren zum Gewinnen von Proteinen für die menschliche Ernährung. Protein- und fettreiche Rohstoffe werden so aufbereitet, dass eine gute Perkolationsfähigkeit gegeben ist und wasserlösliche antinutritive Stoffe extrahierbar sind. Ziel ist die Gewinnung hochwertiger Konzentrate. Durch eine gezielte Toastung und Agglomerierung bei definierten Bedingungen wird erreicht, dass aus den geschälten Rohstoffen durch Perkolationsextraktion qualitativ hochwertige, proteinangereicherte Humanernährungsprodukte gewonnen werden. Es sind Standardausrüstungen der Lebensmittelindustrie einsetzbar, welche einen eingeschränkten Verbrauch an Extraktionsmitteln erlauben. Die Rohstoffe werden hydrothermisch aufgearbeitet, getoastet und agglomeriert und einer Perkolationsextraktion unterworfen. Der Verfahrensschritt "Toasten" umfasst ein Dämpfen der Rohstoffe bei Temperaturen von 110 bis 160°C und eingestellten Wassergehalten von 15 bis 40%. Das Agglomerieren erfolgt in Form einer Pelletierung oder Extrudierung.

Aus der EP,A2 0285098 ist ein faserloses Nebenprodukt der Holzbearbeitungsindustrie beschrieben, welches hauptsächlich aus Zellulose besteht und allenfalls ligninhaltig ist. Dieses faserlose Produkt soll Futtermitteln für Tiere zugemischt werden. Weiter wird Melasse als Bindemittel eingesetzt, wobei die Konzentration verglichen mit der vorliegenden Erfindung verhältnismässig niedrig ist. Das rohe Futtermittel, welches auch Enzymzusätze enthalten kann, wird pelletiert.

Die Erfinder haben sich die Aufgabe gestellt, ein Verfahren zur Herstellung eines Futtermittels der eingangs genannten Art zu schaffen, welches bei kostengünstiger Herstellung ein breites Verwendungsspektrum hat und als hochwertige Proteinquelle, bei einstellbarem Ölgehalt, dient. Insbesondere sollen die Nebenprodukte bei der Rapsölherstellung, Rapsextraktionsschrot und Rapspresskuchen, der Verwendung als hochwertiges Futtermittel zugeführt werden.

Die Aufgabe wird erfindungsgemäss dadurch gelöst, dass
- eine ligninhaltige Verbindung und eine zuckerhaltige Masse, unter Zugabe von Wasser, zu in bezug auf den Ölgehalt in einem vorgegebenen Wert vorliegenden, zerquetschten Samenkörnern dosiert werden,
- durch intensives Rühren eine homogene Mischung mit durch Reibungswärme erhöhter Temperatur erzeugt wird,
- die homogene Mischung in Pellets unterteilt wird, und
- die feuchten Pellets in einem Toaster auf eine über dem Siedepunkt von Wasser liegende Temperatur erhitzt und getrocknet werden.

Weiterbildende und spezielle Ausführungsformen der Erfindung sind Gegenstand von abhängigen Patentansprüchen.

Das Herstellen des schüttfähigen, staubfreien Futtermittels kann in-line erfolgen, jedoch auch vor den beiden letzten Verfahrensstufen unterbrochen werden, indem die im Toaster durch Erhitzen getrockneten Pellets zwischengelagert werden. Es ist auch ein Verfüttern ohne die beiden letzten Verfahrensstufen denkbar.

Als zerquetschte Samenkörner, welche in bezug auf den Ölgehalt in einem vorgegebenen Werte zur Verfügung stehen, werden vorzugsweise eingesetzt:
- Rapsextraktionsschrot mit einem Restölgehalt von 2 - 3 Gew.- %, bezogen auf die gesamte Rapsextraktionsschrotmenge. Die Rapssaat mit etwa 40 % Fettgehalt wird durch den Ölhersteller mit einem organischen Lösungsmittel extrahiert, beispielsweise mit Toluol, er gewinnt etwa 40 Gew.- % Rapsöl. Vor der erfindungsgemässen Aufarbeitung werden allfällige Lösungsmittelresten aus dem Rapsextraktionsschrot abgedampft. Von den eingesetzten Rapskörnern bleiben etwa 60 % als Rapsextraktionsschrot mit niedrigem Fettgehalt.
- Rapspresskuchen mit einem Restölgehalt von 7 - 8 Gew.- %, wiederum bezogen auf den ganzen Rapspresskuchen. Der Ölfabrikant presst die Rapssaat aus und gewinnt etwa 35 Gew.- % Rapsöl, es verbleiben etwa 65 % Rapskuchen mit gegenüber Rapsextraktionsschrot höherem Restölgehalt.
- Senfschrot mit vollem Ölgehalt. Beim Einsatz von Senfschrot wird der Ölgehalt im Gegensatz zu den Nebenprodukten der Rapsölherstellung nicht reduziert und verbleibt in vollem Umfang im Futtermittel.

Die obenstehenden, vorzugsweise genannten Komponenten können einzeln, paarweise oder insgesamt gemischt eingesetzt werden, allenfalls mit weiteren Komponenten als Hilfsstoffe. Mit einer hydrothermischen Behandlung, beispielsweise während einer Stunde bei 101 - 105 °C, insbesondere bei 102 - 103 °C, mit Dampfzusatz, kann der Glucosinolatgehalt z.B. eines Rapskuchens halbiert werden.

Die wirkt sich, wie einleitend erwähnt, wegen unerwünschten Abbauprodukten des Glucosinolates vorteilhaft aus.

In der ersten Verfahrensstufe der Erfindung wird den zerquetschten Samenkörnern vorzugsweise Ligninsulfonat und Melasse zugegeben. Der zugegebene Anteil von Ligninsulfonat liegt dabei zweckmässig bei 1 - 5 Gew.- %, bezogen auf die gesamte Mischung, insbesondere bei 2 - 3 Gew.- %, bei Rapsextraktionsschrot oder Rapskuchen bevorzugt bei etwa 2,5 Gew.- %. Melasse, wahlweise auch ein stark konzentrierter Sirup aus Rübenzucker, wird zweckmässig in einer Konzentration von 10 - 20 Gew.- %, insbesondere von 12 - 18 Gew.- %, bei Rapsextraktionsschrot oder Rapskuchen bevorzugt von etwa 15 Gew.- %, zugegeben, immer bezogen auf die gesamte Mischung.

Durch die Zugabe von Ligninsulfonat und Melasse wird einerseits die Konsistenz der Pellets erhöht und andererseits das Futtermittel für die Tiere schmackhafter gemacht. Eine hinreichende Futtermittelaufnahme ist für eine hohe Milchleistung oder eine optimale Gewichtzunahme unerlässlich.

Das intensive Mischen der zuerquetschten Samenkörner, der ligninhaltigen Verbindung und der zuckerhaltigen Masse wird durch intensives Rühren fortgesetzt, bis durch Reibungswärme eine eingestellte Endtemperatur im Bereich von 70 - 80 °C erreicht ist. Das Mischen erfolgt chargenweise oder in einem Durchlaufverfahren. Pro Stunde können Durchsätze von 2 - 5 t erreicht werden, bei einem Tank von 1 t pro Charge kann die Endtemperatur in 10 - 30 min erreicht werden.

Nach dem Abkühlen wird die homogene Masse auf geeignete Weise in eine schüttfähige, getrocknete Form überführt:
- Die homogene Masse wird nach einer ersten Variante mit einer an sich bekannten Pelletpresse in Quader-, insbesondere Würfelform, mit einigen Millimetern Seitenlänge gebracht. Es können wahlweise Pellets von abgerundeter Form hergestellt werden, welche auch Granalien genannt werden. Die Pellets werden in einem Toaster üblicher Bauart erhitzt und getrocknet.
- Nach einer zweiten Variante werden die feuchten Pellets mikronisiert. Dabei werden sie auf ein endlos umlaufendes Band gegeben, mit einem heissen Gas erwärmt und dadurch getrocknet. Zu Beginn des Mikronisierens kann eine vorstehend beschriebene andere hydrothermische Behandlung eingeschaltet werden.
- Nach einer dritten Variante wird die homogene Masse in an sich bekannter Weise expandiert und die Pellets in einem Toaster getrocknet.
- Nach einer vierten und letzten hier aufgezählten Variante schliesslich wird die homogene Masse in ebenfalls dem Fachmann bekannter Weise extrudiert und die Pellets in einem Toaster getrocknet. Bei dieser Variante müssen ein kleiner Durchsatz und verhältnismässig hohe Kosten in Kauf genommen werden.

Bei allen Varianten erfolgt das Trocknen, sei es in einem Toaster oder durch Luftbeaufschlagung auf einem Förderband, vorzugsweise in einem Temperaturbereich von 120 - 130 °C.

Als Toaster hat sich eine unter Normaldruck arbeitende zylinderförmige Drehtrommel, welche in Richtung der Austrittsöffnung leicht nach unten geneigt ist, als besonders vorteilhaft erwiesen. Sie erlaubt einen kontinuierlichen Materialdurchsatz mit selbsttätigem Vorschub, z.B. 1 - 5 m/min. Die Länge der beheizbaren Drehtrommel liegt in der Regel bei einem Mehrfachen des Durchmessers, beispielsweise beim fünf- bis zehnfachen Durchmesser. Dank einstellbarer Neigung, z.B. im Bereich von 5-10°, der Längsachse kann die Verweilzeit in der Drehtrommel ohne Aenderung weiterer Parameter eingestellt werden.

Die aus der Drehtrommel kontinuierlich austretenden Pellets können in-line der Weiterverarbeitung zugeführt, zwischengelagert oder zu einem Endbearbeiter transportiert werden.

Zur Endbehandlung werden die getrockneten Pellets vorzugsweise mit eine ligninhaltige Verbindung enthaltendem Wasser angefeuchtet und zwischen einem Walzenpaar zu Schrot, Flocken oder Griess kompaktiert. Insbesondere werden die Pellets mit 4 - 5 Gew.- % warmem Wasser, welches etwa 0,5 Gew.- % Ligninsulfonat enthält, angefeuchtet. Bei der inline Behandlung wird zweckmässig das eine Temperatur von 40 - 50 °C aufweisende Kühlwasser des Toasters verwendet, was ökonomisch und ökologisch von Vorteil ist. Die angefeuchteten Pellets werden zwischen einem an den Arbeitsflächen bevorzugt auf 100 - 200 °C erwärmten Walzenpaar kompaktiert. Das Walzenpaar mit aufgerauhten Walzenoberflächen und horizontal verlaufenden Längsachsen bildet einen vertikalen Walzspalt, welchem die Pellets zweckmässig im freien Fall zugeführt werden.

Das Wasser zum Anfeuchten der Pellets kann neben dem erwähnten Ligninsulfonat einen Futtermittelfarbstoff enthalten, welcher die Pellets beispielsweise gelb, gelbbaun oder braun einfärbt. Damit kann eine Kennfarbe verwendet werden, welche das Tier zur Futtermittelaufnahme anregt.

Falls dies als zweckdienlich erachtet wird, kann gleichzeitig mit dem Futtermittelfarbstoff ein Geruch- und/oder Geschmackstoff zugegeben werden.

Das fertige Futtermittel wird nach dem Walzendurchgang abgepackt, beispielsweise in Säcke oder grössere Gebinde, wie Paloxen.

Die erfindungsgemässen Vorteile liegen, wie angetönt, darin, dass die Nebenprodukte der Rapsölproduktion, welche bei einer Einführung von Rapsmethylester als Biodiesel in gewaltigen Mengen anfallen würden, in einer ökologisch und ökonomisch vorteilhaften Weise verwertet werden können und in hohem Masse tiergerecht sind. Weiter haben auf der Basis von Raps und Senf hergestellte Futtermittel in der Regel einen höheren Rohfasergehalt als die weitverbreiteten Sojaprodukte, was sich für die tierische Verdauung positiv auswirkt.

## Patentansprüche

1. Verfahren zur Herstellung eines schüttfähigen, staubfreien Futtermittels aus ölhaltigen Samenkörnern von Hülsenfrüchten, insbesondere aus Raps- und/oder Senfkörnern, welche nach dem Dreschen gereinigt, getrocknet und zerquetscht werden,
dadurch gekennzeichnet, dass
- eine ligninhaltige Verbindung und eine zuckerhaltige Masse, unter Zugabe von Wasser, zu in bezug auf den Ölgehalt in einem vorgegebenen Wert vorliegenden, zerquetschten Samenkörnern dosiert werden,
- durch intensives Rühren eine homogene Mischung mit durch Reibungswärme erhöhter Temperatur erzeugt wird,
- die homogene Mischung in Pellets unterteilt wird, und
- die feuchten Pellets in einem Toaster auf eine über dem Siedepunkt von Wasser liegende Temperatur erhitzt und getrocknet werden.

2. Verfahren nach Anspruch 1, dadurch gekennzeichnet, dass als zerquetschte Samenkörner Rapsextraktionsschrot mit einem Restölgehalt von 2 - 3 Gew- %, Rapspresskuchen mit einem Restölgehalt von 7 - 8 Gew.- % und/oder Senfschrot mit vollem Ölgehalt eingesetzt werden.

3. Verfahren nach Anspruch 1 oder 2, dadurch gekennzeichnet, dass den zerquetschten Samenkörnern Ligninsulfonat, vorzugsweise 1 - 5 Gew.- %, und Melasse, vorzugsweise 10 - 20 Gew.- %, zugegeben werden.

4. Verfahren nach Anspruch 3, dadurch gekennzeichnet, dass 2 - 3 Gew.- %, bei Rapsextraktionsschrot oder Rapskuchen vorzugsweise etwa 2,5 Gew.- %, Ligninsulfonat, und 12 - 18 Gew.- %, bei Rapsextraktionsschrot und Rapskuchen vorzugsweise etwa 15 Gew.- %, Melasse zugegeben werden.

5. Verfahren nach einem der Ansprüche 1 - 4, dadurch gekennzeichnet, dass beim Mischen der zerquetschten Samenkörner, der ligninhaltigen Verbindung und der zuckerhaltigen Masse eine Endtemperatur im Bereich von 70 - 80 °C eingestellt wird.

6. Verfahren nach einem der Ansprüche 1 - 5, dadurch gekennzeichnet, dass die homogen gemischte Masse aus den zerquetschten Samenkörnern, der ligninhaltigen Verbindung und der zuckerhaltigen Masse
- pelletiert und in einem Toaster getrocknet, oder
- pelletiert und mikronisiert, auch kombiniert mit einer anderen hydrothermischen Behandlung, oder
- expandiert und in einem Toaster getrocknet, oder
- extrudiert und in einem Toaster getrocknet wird,
wobei das Trocknen vorzugsweise bei 120 - 130 °C erfolgt.

7. Verfahren nach Anspruch 6, dadurch gekennzeichnet, dass in einer zylinderförmigen, in Richtung der Austrittsöffnung zweckmässig leicht geneigten Drehtrommel kontinuierlich getoastet wird.

8. Verfahren nach einem der Ansprüche 1-7, dadurch gekennzeichnet, dass die getrockneten Pellets mit eine ligninhaltige Verbindung enthaltendem Wasser angefeuchtet und zwischen einem Walzenpaar zu Schrot, Flocken oder Griess kompaktiert werden.

9. Verfahren nach Anspruch 8, dadurch gekennzeichnet, dass die getrockneten Pellets vor dem Walzen mit 4 - 5 Gew.- % warmem Wasser, vorzugsweise dem Kühlwasser von 40 - 50 °C des Toasters, mit etwa 0,5 Gew.- % Ligninsulfonat angefeuchtet und zwischen einem auf vorzugsweise 100 - 200 °C erwärmten Walzenpaar kompaktiert werden.

10. Verfahren nach Anspruch 8 oder 9, dadurch gekennzeichnet, dass beim Anfeuchten der getrockneten Pellets ein Futtermittelfarbstoff zugegeben wird.

11. Verfahren nach einem der Ansprüche 1 - 10, dadurch gekennzeichnet, dass Rapspresskuchen vor dem Mischen mit einer ligninhaltigen Verbindung und einer zuckerhaltigen Masse hydrothermisch behandelt werden, vorzugsweise während etwa 1 Stunde bei 101 - 105 °C, insbesondere bei 102 - 103 °C, mit Dampfzusatz.
